# EUROPEAN PATENT APPLICATION

(11) **EP 4 563 807 A1**
(43) Date of publication of application: **04.06.2025**
(21) Application number: 23845063.9
(22) Date of filing: 31.05.2023
(51) Int. Cl.: F02M 35/10, F02B 29/04

(54) **AIR INLET ASSEMBLY OF ENGINE, ENGINE, AND VEHICLE**

(30) Priority: 29.07.2022 CN 202210905127
(71) Applicant: BYD Company Limited, Shenzhen, Guangdong 518118 (CN)
(72) Inventor: GUO, Peng, Shenzhen, Guangdong 518118 (CN); QI, Hao, Shenzhen, Guangdong 518118 (CN); HAO, Shengjie, Shenzhen, Guangdong 518118 (CN); YAN, Weiqi, Shenzhen, Guangdong 518118 (CN); WANG, Bin, Shenzhen, Guangdong 518118 (CN)
(74) Representative: Mathys & Squire
(86) International application number: PCT/CN2023/097463
(87) International publication number: WO 2024/021850

(57) **Abstract**

A vehicle, arranged with an engine. The engine comprises an air inlet assembly of the engine, and the air inlet assembly comprises an air inlet manifold, an intercooler, and a throttle valve. The intercooler has a first air inlet and an air outlet, and the air outlet is directly attached to and in communication with the air inlet manifold. The throttle valve is arranged on the first air inlet to control an air inflow amount.

## Description

### CROSS-REFERENCE TO RELATED APPLICATIONS

The present disclosure claims priority to Chinese Patent Application No. 202210905127.2, filed on July 29, 2022 and entitled "AIR INLET ASSEMBLY OF ENGINE, ENGINE, AND VEHICLE". The entire content of the above-referenced application is incorporated herein by reference.

### FIELD

The present disclosure relates to the field of vehicle power technologies, and specifically, to an air inlet assembly of an engine, an engine, and a vehicle.

### BACKGROUND

Compared with an intake and exhaust system of a naturally aspirated engine, parts such as a supercharger and an intercooler have been added to a supercharged engine, and a larger arrangement space is required. However, the engine compartment space of an overall vehicle is limited, and therefore the arrangement requirements of an air inlet system of the supercharged engine are particularly strict. The characteristic of the air inflow of the supercharged engine lies in that after fresh air undergoes compression work performed by the supercharger, the temperature of gas rises sharply, which may generally reach a maximum of about 150°C. If the gas is not cooled, an actual air inflow amount of the engine is small, which affects a supercharging effect and emission. Therefore, the air inflow of the supercharged engine generally requires cooling through the intercooler. Especially, a high-performance supercharged direct-injection gasoline engine has a high requirement on a cooling capacity of an intercooler.

In the related art, the oversized intercooler and air inlet manifold occupy a significant amount of space, making it difficult to arrange them in an engine compartment with a limited space, which also affects arrangement design of other components in the engine compartment.

### SUMMARY

The present disclosure is intended to resolve at least one of technical problems existing in the related art. Accordingly, the present disclosure provides an air inlet assembly of an engine. The air inlet assembly of an engine has advantages such as low costs, a small volume, and convenient mounting.

The present disclosure further provides an engine having the foregoing air inlet assembly.

The present disclosure further provides a vehicle having the foregoing engine.

An air inlet assembly of an engine according to embodiments of the first aspect of the present disclosure includes: an air inlet manifold; an intercooler, where the intercooler having a first air inlet and an air outlet, and the air outlet is directly attached to and in communication with the air inlet manifold; and a throttle valve, where the throttle valve is arranged on the first air inlet to control an air inflow amount.

The air inlet assembly according to the embodiments of the present disclosure has advantages such as low costs, a small volume, and convenient mounting.

According to some embodiments of the present disclosure, the intercooler includes: an intercooler body; an air inlet cavity and an air outlet cavity, where the intercooler body is arranged between the air inlet cavity and the air outlet cavity and respectively in communication with the air inlet cavity and the air outlet cavity, the first air inlet is opened on the air inlet cavity, and the air outlet is opened on the air outlet cavity.

According to some embodiments of the present disclosure, a gas storage capacity of the intercooler body is V1, and V1 satisfies a relation formula: 1200 ml ≤ V1 ≤ 1300 ml.

According to some embodiments of the present disclosure, the air inlet cavity is arranged with a first air inlet section, a second air inlet section, and a third air inlet section that are sequentially in communication, the first air inlet section is in communication with the first air inlet, and the third air inlet section is in communication with the intercooler body, to uniformly guide gas into the intercooler body.

According to some embodiments of the present disclosure, a cross-sectional area of the third air inlet section is greater than a cross-sectional area of the first air inlet section, and a cross-sectional area of the second air inlet section gradually increases from the first air inlet section to the third air inlet section.

According to some embodiments of the present disclosure, a spacing between a front side wall and a rear side wall of the second air inlet section gradually increases from right to left, an angle between the front side wall and the rear side wall of the second air inlet section is α, and α satisfies a relation formula: 50° ≤ α ≤ 70°.

According to some embodiments of the present disclosure, the air outlet cavity is arranged with a first air outlet section, a second air outlet section, and a third air outlet section that are sequentially in communication, the first air outlet section is in communication with the air outlet, and the third air outlet section is in communication with the intercooler body, to uniformly guide gas into the air inlet manifold.

According to some embodiments of the present disclosure, a cross-sectional area of the third air outlet section is less than a cross-sectional area of the first air outlet section, and a cross-sectional area of the second air outlet section gradually decreases from the first air outlet section to the third air outlet section.

According to some embodiments of the present disclosure, a spacing between a front side wall and a rear side wall of the second air outlet section gradually decreases from right to left, an angle between the rear side wall of the second air outlet section and a cross-section of the air outlet cavity is β, and β satisfies a relation formula: 20° ≤ β ≤ 40°.

According to some embodiments of the present disclosure, a spacing between an upper side wall and a lower side wall of the second air outlet section gradually decreases from right to left, an angle between the upper side wall and the lower side wall of the second air outlet section is γ, and γ satisfies a relation formula: 25° ≤ γ ≤ 35°.

According to some embodiments of the present disclosure, multiple reinforcing ribs are arranged on outer walls of the air inlet cavity and/or the air outlet cavity, and the multiple reinforcing ribs are distributed in a staggered manner.

According to some embodiments of the present disclosure, the intercooler body is arranged with a cooling channel, and the intercooler body is arranged with a water inlet pipe connector in communication with one end of the cooling channel and a water outlet pipe connector in communication with another end of the cooling channel.

According to some embodiments of the present disclosure, the air inlet manifold is arranged with a pressure stabilizing cavity and an air inlet passage, one end of the air inlet passage is in communication with the pressure stabilizing cavity, another end of the air inlet passage is in communication with an engine cylinder block, a bottom wall of the air inlet passage includes a first wall section, the first wall section is connected to a bottom wall of the pressure stabilizing cavity and is arranged obliquely downward with respect to the bottom wall of the pressure stabilizing cavity, an angle δ is formed between the first wall section and the bottom wall of the pressure stabilizing cavity, and 2° ≤ δ ≤ 5°.

According to some embodiments of the present disclosure, the bottom wall of the air inlet passage further includes: a second wall section, where the second wall section is connected to a side of the first wall section away from the pressure stabilizing cavity, the second wall section is arranged obliquely downward with respect to the first wall section, an angle ε is formed between the second wall section and the first wall section, and 24° ≤ ε ≤ 26°.

According to some embodiments of the present disclosure, a volume of the pressure stabilizing cavity is V2, and V2 satisfies a relation formula: 1 L < V2 < 1.2 L.

According to some embodiments of the present disclosure, a length of the air inlet passage is L, and L satisfies a relation formula: 70 mm < L < 80 mm.

According to some embodiments of the present disclosure, the pressure stabilizing cavity is arranged with: an impact separation piece, where the impact separation piece is located in the pressure stabilizing cavity, to impact entering gas to reduce generation of condensed water; and a flow guiding piece, where the flow guiding piece is arranged in the pressure stabilizing cavity, to guide condensed water in the pressure stabilizing cavity to the air inlet passage.

According to some embodiments of the present disclosure, the impact separation piece is an impact grid, the pressure stabilizing cavity is arranged with a second air inlet, and the impact grid corresponds to the second air inlet, to impact entering gas to reduce generation of condensed water; and the flow guiding piece includes multiple flow guiding baffles, multiple air inlet passages are provided, each of the multiple flow guiding baffles extends toward the air inlet passages, and the multiple flow guiding baffles guide condensed water in the pressure stabilizing cavity to the multiple air inlet passages.

According to embodiments of a second aspect of the present disclosure, an engine is provided, including: engine cylinder block; a cylinder head, where the cylinder head covers above the engine cylinder block, and a mounting bracket is arranged on the cylinder head; and the air inlet assembly of an engine according to the embodiments of the first aspect of the present disclosure. In an up-down direction, the intercooler is located above the air inlet manifold, and the mounting bracket is fixedly connected to the intercooler and/or the throttle valve.

Through the use of the air inlet assembly of the engine according to the embodiments of the first aspect of the present disclosure, the engine according to embodiments of the second aspect of the present disclosure has advantages such as low costs, a small volume, and convenient mounting.

According to embodiments of the third aspect of the present disclosure, a vehicle is provided, including the engine according to the embodiments of the second aspect of the present disclosure.

Through the use of the engine according to the embodiments of the second aspect of the present disclosure, the vehicle according to the embodiments of the third aspect of the present disclosure has advantages such as low costs, a small volume, and convenient mounting.

Additional aspects and advantages of the present disclosure are partially given in the following description, and partially become apparent from the following description or are learned through practice of the present disclosure.

### BRIEF DESCRIPTION OF THE DRAWINGS

The foregoing and/or additional aspects and advantages of the present disclosure will become apparent and comprehensible in the description made with reference to the following accompanying drawings, where:
FIG. 1 is a top view of an air inlet assembly of an engine according to an embodiment of the present disclosure;
FIG. 2 is a side view of an air inlet assembly of an engine according to an embodiment of the present disclosure;
FIG. 3 is a schematic structural diagram of an air inlet assembly of an engine according to an embodiment of the present disclosure;
FIG. 4 is another schematic structural diagram of an air inlet assembly of an engine according to an embodiment of the present disclosure;
FIG. 5 is a schematic structural diagram of an air inlet cavity according to an embodiment of the present disclosure;
FIG. 6 is a cross-sectional view of an air inlet cavity according to an embodiment of the present disclosure;
FIG. 7 is a cross-sectional view of an air outlet cavity according to an embodiment of the present disclosure;
FIG. 8 is another cross-sectional view of an air outlet cavity according to an embodiment of the present disclosure;
FIG. 9 is a cross-sectional view of an air inlet passage and a pressure stabilizing cavity according to an embodiment of the present disclosure;
FIG. 10 is a cross-sectional view of an air inlet passage according to an embodiment of the present disclosure; and
FIG. 11 is a schematic block diagram of a vehicle according to an embodiment of the present disclosure.

In the drawings:
1. air inlet assembly of an engine; 2. engine;
100. air inlet manifold; 110. pressure stabilizing cavity; 111. impact grid; 112. flow guiding baffle; 113. second air inlet; 120. air inlet passage; 121. first wall section; 122. second wall section;
200. intercooler; 210. first air inlet; 220. air outlet; 230. intercooler body; 240. air inlet cavity; 241. first air inlet section; 242. second air inlet section; 243. third air inlet section; 250. air outlet cavity; 251. first air outlet section; 252. second air outlet section; 253. third air outlet section; 260. reinforcing rib; 270. water inlet pipe connector; 280. water outlet pipe connector;
300. throttle valve;
400. cylinder head; 500. mounting bracket; 600. fixing bracket; 700. air inlet pipe; 800. engine cylinder block; and 1000. vehicle.

### DETAILED DESCRIPTION

The embodiments described with reference to the accompanying drawings are exemplary, and the following describes the embodiments of the present disclosure in detail.

In the description of the present disclosure, it should be understood that, orientations or position relationships indicated by terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation on the present disclosure.

In the description of the present disclosure, a "first feature" and a "second feature" may include one or more such features.

In the description of the present disclosure, the meaning of "multiple" is two or more than two.

An air inlet assembly 1 of an engine according to an embodiment of the present disclosure is described below with reference to the accompanying drawings.

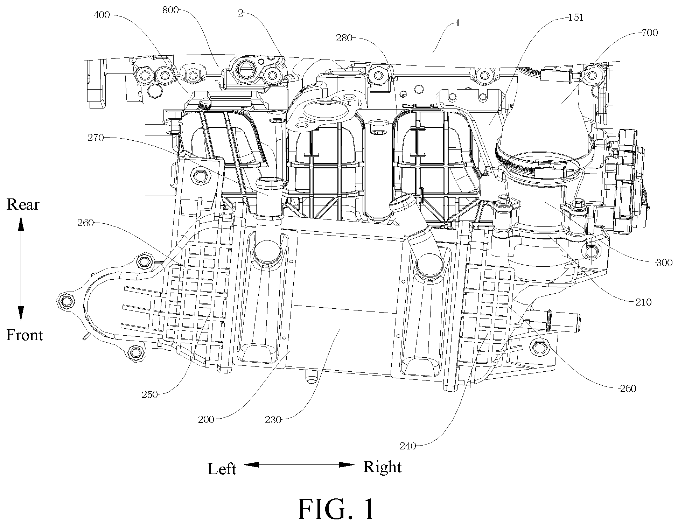

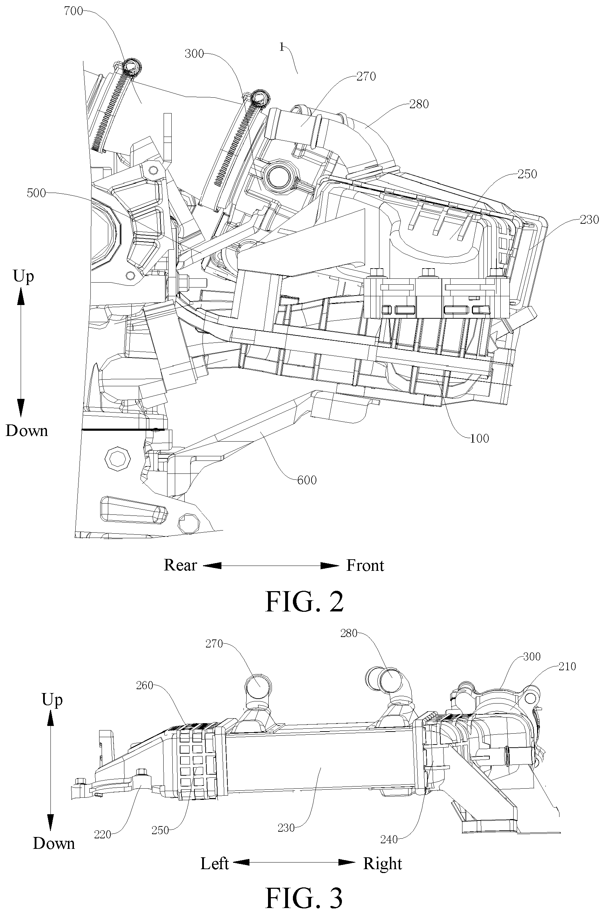

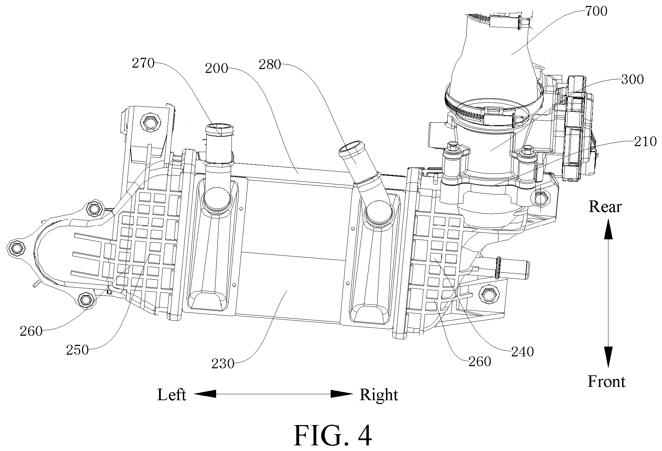

As shown in FIG. 1 to FIG. 10, the air inlet assembly 1 of an engine includes an air inlet manifold 100, an intercooler 200, and a throttle valve 300.

The intercooler 200 has a first air inlet 210 and an air outlet 220. The air outlet 220 is directly attached to and in communication with the air inlet manifold 100. The throttle valve 300 is arranged on the first air inlet 210.

The temperature of exhaust discharged by an engine is very high, and the temperature of entering gas is increased due to the pressure increasing of a supercharger. In addition, in a process in which air is compressed, the density of the air increases, and further the temperature of air discharged by the supercharger increases. In addition, as the gas pressure increases, the density of oxygen decreases, which greatly affects the combustion effective efficiency of the engine. Therefore, for the air inlet assembly 1 of an engine according to the embodiments of the present disclosure, high-temperature air from the supercharger is cooled by using the intercooler 200, and the air cooled by the intercooler 200 enters an engine cylinder block through the air inlet manifold 100 and is mixed with fuel for combustion to release energy, so that thermal load of the engine 2 can be greatly reduced, to improve an air inflow amount of the engine 2, thereby improving the combustion effective efficiency of the engine 2, and improving the power performance of a vehicle.

In addition, the air outlet 220 of the intercooler 200 is directly attached to and in communication with the air inlet manifold 100, so that the structure formed by the intercooler 200 and the air inlet manifold 100 has a high integration level, and an air guide pipe between the intercooler 200 and the air inlet manifold 100 is omitted. This is conducive to saving materials and further reducing costs. In addition, an overall volume of the air inlet assembly 1 of an engine can be smaller, which is more conducive to arranging the intercooler 200 in an engine compartment of the engine 2 with a limited space, thereby improving mounting convenience.

In addition, the throttle valve 300 is arranged on the first air inlet 210 to control an air inflow amount. With such an arrangement, an amount of gas that enters the intercooler 200 can be precisely controlled, so that the air inflow amount of the intercooler 200 is almost a required amount of the engine, and it can be ensured that air that enters the air inlet manifold 100 can be fully burned, thereby ensuring the combustion effective efficiency of the engine, and greatly reducing fuel consumption. Compared with an air inlet assembly of an engine in the related art, the air inlet assembly 1 of an engine in the present disclosure can control the air inflow amount of the intercooler 200 through the throttle valve 300 according to different operating conditions and different air inflow amount requirements of the engine 2, so that different requirements can be met. In addition, an amount of gas that needs to be cooled by the intercooler 200 is reduced, so that the volume of the intercooler 200 can be effectively reduced, making the arrangement of the entire engine compartment compact, a space arrangement requirement of a small engine compartment can be met, and great convenience is provided for the freedom of overall vehicle design.

In addition, the throttle valve 300 is arranged on the first air inlet 210, and it is not necessary to additionally arrange an air guide pipe between the air outlet 220 of the intercooler 200 and the air inlet manifold 100 to fix the throttle valve 300, so that an air guide pipe between the air outlet 220 of the intercooler 200 and the air inlet manifold 100 is not required. In addition, the throttle valve 300 is arranged on the first air inlet 210, so that an overall height is not increased, which is conducive to space arrangement. In addition, through the adjustment of the openness of the throttle valve 300, the air inflow amount of the intercooler 200 can be adjusted to adequately meet an air inflow amount required by the engine 2. In this way, a problem of wasting an internal space of the intercooler 200 is avoided, so that the volume of the intercooler 200 is relatively small for better matching and arrangement in the compartment of the engine 2.

In this way, the air inlet assembly according to the embodiments of the present disclosure has advantages such as low costs, a small volume, and convenient mounting.

Compared with an air inlet assembly of an engine in the related art, the air inlet assembly 1 of an engine in the embodiments of the present disclosure has the following beneficial effects:

First, the required air inflow amount of the engine 2 is almost an amount of gas entering the intercooler 200, so that it can be ensured that the gas entering the air inlet manifold 100 is fully burnt in the engine cylinder block 800. Second, compared with the related art, in the air inlet assembly 1 of an engine in this embodiment, the intercooler 200 is arranged with the throttle valve 300 on the first air inlet 210, so that the amount of gas that needs to be cooled by the intercooler 200 is relatively reduced, and the volume of the intercooler 200 is reduced to be applicable to an arrangement in which the space of the engine compartment is small, thereby reducing costs. Third, different engine combustion requirements can be met by controlling the throttle valve 300 according to different operating conditions and different air inflow amount requirements.

In some specific embodiments of the present disclosure, as shown in FIG. 1 to FIG. 5, the intercooler 200 includes an intercooler body 230, an air inlet cavity 240, and an air outlet cavity 250.

The intercooler body 230 is arranged between the air inlet cavity 240 and the air outlet cavity 250, and in communication with both the air inlet cavity 240 and the air outlet cavity 250. The first air inlet 210 is opened on the air inlet cavity 240, and the air outlet 220 is opened on the air outlet cavity 250.

With such an arrangement, one end of the intercooler body 230 is in communication with the air inlet cavity 240, and the first air inlet 210 is opened on the air inlet cavity 240. After entering the air inlet cavity 240 through the first air inlet 210, gas is buffered in the air inlet cavity 240. Therefore, when entering the intercooler body 230 from the air inlet cavity 240, gas can enter the intercooler body 230 slowly and uniformly for cooling, to avoid a case of stress concentration due to a nonuniform flow rate of the gas. Further, the first air inlet 210 is opened on a side of the air inlet cavity 240. A smooth transition is provided at a corner of an inner wall of the air inlet cavity 240, so that gas is unlikely to undergo great disturbance in the air inlet cavity 240, so that the uniformity of the flow rate of the gas and the flowing smoothness of entering the intercooler body 230 can be effectively ensured, thereby improving cooling performance.

In addition, another end of the intercooler body 230 is connected to the air outlet cavity 250, and the air outlet 220 is opened on the air outlet cavity 250. In this way, gas can slowly and uniformly enter the air inlet manifold 100. In addition, a smooth transition at a corner of an inner wall of the air outlet cavity 250 is similar to that of the air inlet cavity 240, so that it can be effectively ensured that gas enters the air inlet manifold 100 at a uniform flow rate, to eventually fully burn with fuel in the engine cylinder block 800, thereby improving combustion efficiency.

In some specific embodiments of the present disclosure, a gas storage capacity of the intercooler body 230 is V1, and V1 satisfies a relation formula: 1200 ml ≤ V ≤ 1300 ml. With such an arrangement, a range of the air inflow amount required by the engine 2 can be adequately met, and the volume of the intercooler body 230 can be limited in a particular range. In addition, according to the engine compartment of the engine 2 with a limited space, the volume of the intercooler body 230 can be adaptively set, to better integrally arrange the intercooler 200 in the engine compartment of the engine 2 without occupying an excessive space, and a particular space is provided for arranging other components, thereby effectively optimizing the space arrangement in the compartment of the engine.

For the intercooler 200, a length is a, a height is b, and a width is c. a, b, and c satisfy relation formulas: 320 mm ≤ a ≤ 380 mm, 45 mm ≤ b ≤ 60 mm, and 100 mm ≤ c ≤ 150 mm. In this way, a volume parameter of the intercooler 200 is designed to well meet the foregoing range of the gas storage capacity of the intercooler body 230. In addition, an air inflow amount requiring cooling of the intercooler 200 is small, and the product size can be reduced, and can be reduced by about 4/1 to 1/3 with respect to a volume parameter of an existing intercooler 200. In this way, when a required volume of the engine 2 is met, an overall volume of a power system can be effectively reduced, product costs are reduced, and a sufficient arrangement space can be provided for the engine compartment of the engine 2. Especially in a case that an arrangement space of a hybrid model is compact, the intercooler 200 with a small volume is very applicable. Certainly, the volume parameter of the intercooler 200 is not limited to the foregoing values. The volume parameter of the intercooler 200 may be set according to a designed required air inflow amount.

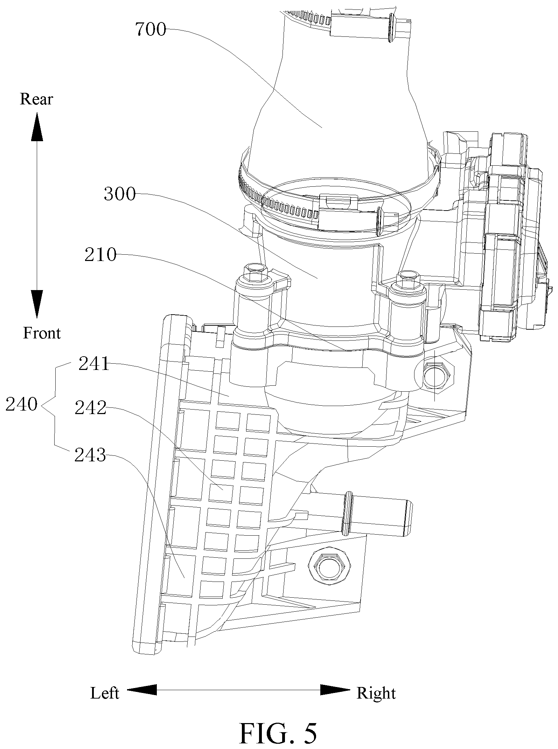

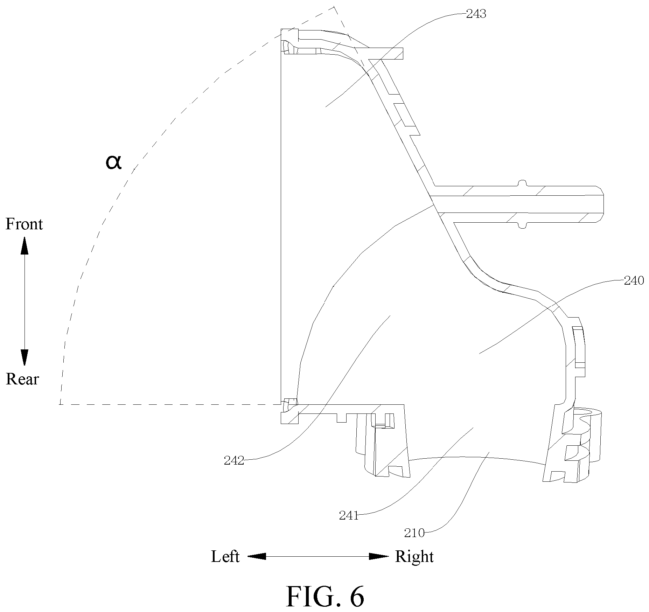

In some specific embodiments of the present disclosure, as shown in FIG. 5 and FIG. 6, the air inlet cavity 240 is arranged with a first air inlet section 241, a second air inlet section 242, and a third air inlet section 243 that are sequentially in communication.

The first air inlet section 241 is in communication with the first air inlet 210, and the third air inlet section 243 is in communication with the intercooler body 230, to uniformly guide gas into the intercooler body 230. With such an arrangement, gas may sequentially pass through the first air inlet section 241, the second air inlet section 242, and the third air inlet section 243 to uniformly enter the intercooler body 230.

Further, a cross-sectional area of the third air inlet section 243 is greater than a cross-sectional area of the first air inlet section 241, and a cross-sectional area of the second air inlet section 242 gradually increases from the first air inlet section 241 to the third air inlet section 243. With such an arrangement, the cross-sectional area of the first air inlet section 241 is small, the cross-sectional area of the second air inlet section 242 gradually increases and eventually gradually becomes equal to the cross-sectional area of the third air inlet section 243. An appearance of the air inlet cavity 240 gradually increases in an air inlet direction. In this way, gas slowly enters from the first air inlet section 241, and because the second air inlet section 242 gradually expands to the third air inlet section 243, the gas uniformly enters the intercooler body 230.

Furthermore, as shown in FIG. 6, a spacing between a front side wall and a rear side wall of the second air inlet section 242 gradually increases from right to left. An angle between the front side wall and the rear side wall of the second air inlet section 242 is α. α satisfies a relation formula: 50° ≤ α ≤ 70°.

With such an arrangement, in the air inlet direction, instead of a conventional boss structure, the air inlet cavity 240 is formed by the first air inlet section 241, the second air inlet section 242, and the third air inlet section 243 that are sequentially in communication. The cross-sectional area of the first air inlet section 241 is small, and the cross-sectional area of the second air inlet section 242 gradually increases and eventually gradually becomes equal to the cross-sectional area of the third air inlet section 243. In addition, the angle α between the front side wall and the rear side wall of the second air inlet section 242 is set to 50° to 70°. In a front-rear direction, gas can slowly and uniformly enter the first air inlet section 241, the second air inlet section 242, and the third air inlet section 243 sequentially, i.e., is uniformly distributed in the air inlet cavity 240, so that the gas uniformly enters the intercooler body 230 for quick cooling, thereby effectively improving the air inflow uniformity of the intercooler 200. Compared with an existing intercooler structure, the air inflow uniformity of the intercooler 200 can be improved by over 10%, and cooling performance can be improved by 2% to 3% or more.

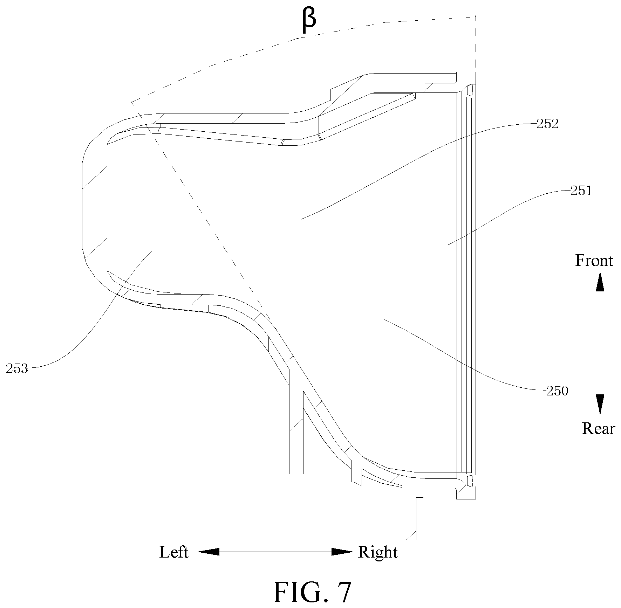

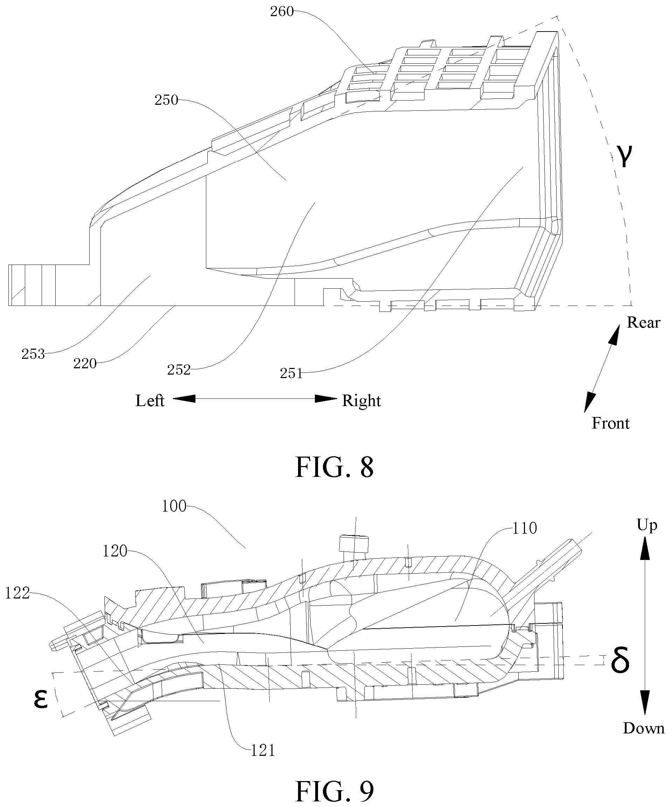

**In** some specific embodiments of the present disclosure, as shown in FIG. 7 and FIG. 8, the air outlet cavity 250 is arranged with a first air outlet section 251, a second air outlet section 252, and a third air outlet section 253 that are sequentially in communication, the first air outlet section 251 is in communication with the air outlet 220, and the third air outlet section 253 is in communication with the intercooler body 230, to uniformly guide gas into the air inlet manifold 100.

With such an arrangement, gas cooled in the intercooler body 230 may sequentially pass through the first air outlet section 251, the second air outlet section 252, and the third air outlet section 253 to uniformly enter the air inlet manifold 100, so that the gas uniformly enters the engine cylinder block 800 for full combustion.

Further, as shown in FIG. 7 and FIG. 8, a cross-sectional area of the third air outlet section 253 is less than a cross-sectional area of the first air outlet section 251. A cross-sectional area of the second air outlet section 252 gradually decreases from the first air outlet section 251 to the third air outlet section 253. With such an arrangement, in an air outlet direction, the cross-sectional area of the first air outlet section 251 is large, and the cross-sectional area of the second air outlet section 252 gradually decreases and decreases to be equal to the cross-sectional area of the third air outlet section 253, so that the air outlet cavity 250 has a shape of gradually decreasing in the air outlet direction. In this way, after a large amount of gas enters the first air outlet section 251, because the second air outlet section 252 gradually decreases to the third air outlet section 253, the gas uniformly enters the air inlet manifold 100.

Furthermore, as shown in FIG. 7 and FIG. 8, a spacing between a front side wall and a rear side wall of the second air outlet section 252 gradually decreases from right to left. An angle between the rear side wall of the second air outlet section 252 and a cross-section of the air outlet cavity 250 is β. β satisfies a relation formula: 20° ≤ β ≤ 40°. In this way, in the air outlet direction, the cross-sectional area of the first air outlet section 251 is large, the cross-sectional area of the second air outlet section 252 gradually decreases and decreases to be equal to the cross-sectional area of the third air outlet section 253, and the angle β between the rear side wall of the second air outlet section 252 and the cross-section of the air outlet cavity 250 is set to 20° to 40°, so that gas can sequentially pass through the first air outlet section 251, the second air outlet section 252, and the third air outlet section 253, and can slowly and uniformly flow into the air inlet manifold 100, which helps to reduce a flow rate of the gas in the air inlet manifold 100, thereby improving cooling efficiency of the intercooler 200, and improving cooling performance by 2% to 3% or even more.

In some specific embodiments of the present disclosure, as shown in FIG. 8, a spacing between an upper side wall and a lower side wall of the second air outlet section 252 gradually decreases from right to left. An angle between the upper side wall and the lower side wall of the second air outlet section 252 is γ. γ satisfies a relation formula: 25° ≤ γ ≤ 35°.

With such an arrangement, the angle γ between the upper side wall and the lower side wall of the second air outlet section 252 is set to 25° to 35°, which facilitates flowing of the gas at a uniform rate, reduces a loss in the flowing of the gas, and effectively reduces a pressure loss in the intercooler 200, thereby ensuring that an air inflow amount of the air inlet manifold 100 is nearly the required volume of the engine 2. In addition, the angle between the rear side wall of the second air outlet section 252 and the cross-section of the air outlet cavity 250 is set to β in combination, so that gas flows slowly and uniformly, thereby further improving the cooling efficiency of the intercooler 200.

In some embodiments of the disclosure, multiple reinforcing ribs 260 are arranged on outer walls of the air inlet cavity 240 and/or the air outlet cavity 250, and the multiple reinforcing ribs 260 are distributed in a staggered manner. With such an arrangement, the reinforcing ribs 260 are arranged on the air inlet cavity 240 and/or the air outlet cavity 250, and the reinforcing ribs 260 are distributed in a mesh form on outer surfaces of the air inlet cavity 240 and/or the air outlet cavity 250, so that the structural strength of the air inlet cavity 240 and/or the air outlet cavity 250 can be enhanced, thereby improving the modality of the intercooler 200.

In addition, the intercooler body 230 is arranged with a cooling channel, and the intercooler body 230 is arranged with a water inlet pipe connector 270 in communication with one end of the cooling channel and a water outlet pipe connector 280 in communication with another end of the cooling channel, to perform water cooling on gas that enters the intercooler body 230. In addition, a left bracket is arranged at each of an upper part and a lower part on a rear side of the air inlet cavity 240, and a right bracket is arranged at each of an upper part and a lower part on a rear side of the air outlet cavity 250. With such an arrangement, the structure is compact, a space of the engine compartment can be saved, mounting is reliable, and vibration reduction and noise avoidance can be reduced. In addition, a weight is small, lightweight design is met, fuel consumption of the overall vehicle can be reduced, and pipe arrangement in the engine compartment can be optimized, thereby ensuring aesthetics.

In some specific embodiments of the present disclosure, the air inlet manifold 100 is arranged with a pressure stabilizing cavity 110 and an air inlet passage 120.

One end of the air inlet passage 120 is in communication with the pressure stabilizing cavity 110, and another end of the air inlet passage 120 is in communication with the engine 2. A bottom wall of the air inlet passage 120 includes a first wall section 121. The first wall section 121 is connected to a bottom wall of the pressure stabilizing cavity 110 and is arranged obliquely downward with respect to the bottom wall of the pressure stabilizing cavity 110. An angle δ is formed between the first wall section 121 and the bottom wall of the pressure stabilizing cavity 110. 2° ≤ δ ≤ 5°.

In this way, gas that enters the air inlet manifold 100 can be first buffered in the pressure stabilizing cavity 110, and then is guided into cylinders of the engine 2 through the air inlet passage 120, so that normal operation of the air inlet manifold 100 can be implemented. In addition, the angle is formed between the first wall section 121 of the air inlet passage 120 and the bottom wall of the pressure stabilizing cavity 110, and in this way, condensed water can naturally flow downward along a second wall section 122 under the action of gravity, so that condensed water can be further kept from accumulating at the pressure stabilizing cavity 110 and the air inlet passage 120, and the operating performance of the engine 2 can be further improved.

In addition, 2° ≤ δ ≤ 5°, so that the angle of the bottom wall of the pressure stabilizing cavity 110 being downward obliquely with respect to the first wall section 121 is set within an appropriate range. In this way, in one aspect, an angle between the bottom wall of the pressure stabilizing cavity 110 and the bottom wall of the air inlet passage 120 can be kept from being excessively small, to ensure that condensed water can naturally flow to the bottom wall of the air inlet passage 120 along the bottom wall of the pressure stabilizing cavity 110, thereby keeping condensed water from accumulating in the pressure stabilizing cavity 110. In another aspect, the angle between the bottom wall of the pressure stabilizing cavity 110 and the bottom wall of the air inlet passage 120 can be kept from being excessively large, to improve the buffering effect of the pressure stabilizing cavity 110 for gas. In this way, the structural design of the air inlet manifold 100 can be optimized, so that normal operation of the air inlet manifold 100 can be ensured, and condensed water can be kept from accumulating in the air inlet manifold 100, so that the operating performance of the engine 2 can be improved.

Further, as shown in FIG. 9, the bottom wall of the air inlet passage 120 further includes the second wall section 122.

The second wall section 122 is connected to a side of the first wall section 121 away from the pressure stabilizing cavity 110. The second wall section 122 is arranged obliquely downward with respect to the first wall section 121. An angle ε is formed between the second wall section 122 and the first wall section 121. 24° ≤ ε ≤ 26°.

Therefore, the angle between the second wall section 122 and the first wall section 121 may be set within an appropriate range. In this way, the angle of the second wall section 122 being downward obliquely with respect to the first wall section 121 may be set to be appropriate, so that when condensed water flows to the second wall section 122 from the first wall section 121, a flow rate of the condensed water can be controlled within an appropriate range, making the flowing of the condensed water on the second wall section 122 stabler and smoother.

It should be noted that a connection between the first wall section 121 and the second wall section 122 may be arc-shaped. In this way, the first wall section 121 and the second wall section 122 may be connected by a smooth transition, so that a flow path of condensed water can be smoother, and the stability and smoothness of condensed water flowing on the bottom wall of the air inlet passage 120 can be further improved.

In addition, the angle formed between the bottom wall of the pressure stabilizing cavity 110 and the bottom wall of the air inlet passage 120 and an angle formed between a tangent of the second wall section 122 and the first wall section 121 are further defined, so that the angle formed between the bottom wall of the pressure stabilizing cavity 110 and the bottom wall of the air inlet passage 120 and the angle formed between the tangent of the second wall section 122 and the first wall section 121 can be controlled within better ranges, and the structural design of the air inlet manifold 100 can be further optimized, thereby ensuring the normal operation of the air inlet manifold 100, and further improving the operating performance of the engine 2.

In some specific embodiments of the present disclosure, a volume of the pressure stabilizing cavity 110 is V2, and V2 satisfies a relation formula: 1 L < V2 < 1.2 L.

In this way, the volume of the pressure stabilizing cavity 110 may be set within an appropriate range, so that on the premise of ensuring the structural compactness of the air inlet manifold 100, the pressure stabilizing cavity 110 can effectively buffer gas that enters the air inlet manifold 100, and stable gas enters the engine 2 through the air inlet passage 120, thereby ensuring the normal operation of the engine 2, and improving the operating performance of the engine 2.

In some specific embodiments of the present disclosure, a length of the air inlet passage 120 is L, and L satisfies a relation formula: 70 mm < L < 80 mm. The length of the air inlet passage 120 means an extension length of the air inlet passage 120 in the air inlet direction, i.e., a sum of lengths of the first wall section 121 and the second wall section 122. With such an arrangement, the length of the air inlet passage 120 may be set within an appropriate range. When the engine 2 operates in a high-speed range, the power and torque can be improved, and fuel consumption can be reduced, so that the structural design of the air inlet manifold 100 can be further optimized, thereby further improving the operating performance of the engine 2.

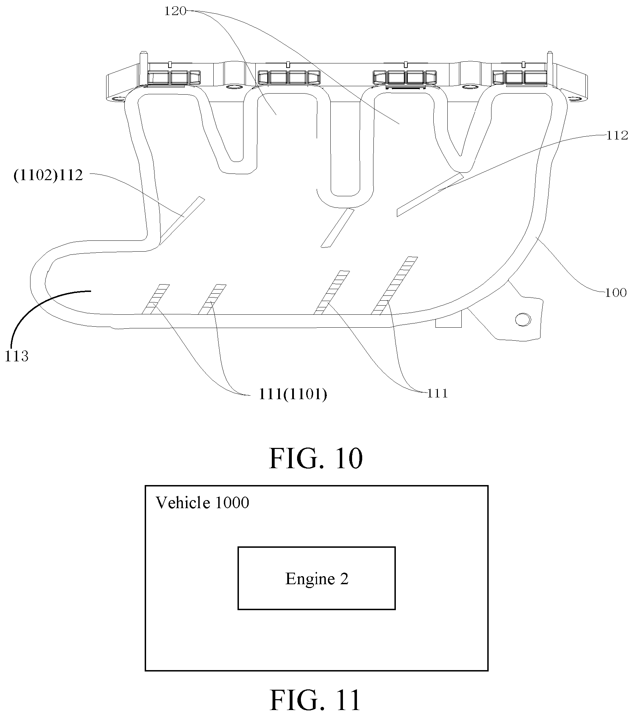

In some specific embodiments of the present disclosure, as shown in FIG. 10, the pressure stabilizing cavity 110 is arranged with an impact separation piece 1101 and a flow guiding piece 1102.

The impact separation piece 1101 is located in the pressure stabilizing cavity 110, to impact entering gas to reduce generation of condensed water. The flow guiding piece 1102 is arranged in the pressure stabilizing cavity 110, to guide condensed water in the pressure stabilizing cavity 110 to the air inlet passage 120. In this way, condensed water that enters the pressure stabilizing cavity 110 can impact the impact separation piece 1101, and condensed water that flows quickly can spread to different positions of the pressure stabilizing cavity 110, and the flow rate of condensed water can be reduced. In addition, when the condensed water in the pressure stabilizing cavity 110 flows into the air inlet passage 120, the flow guiding piece 1102 can guide condensed water into the air inlet passage 120, so that the flowing of condensed water is stabler, a flow of condensed water that enters the air inlet passage 120 is more uniform, flows of condensed water that enters the cylinders through the air inlet passage 120 can be more uniform, and the operating performance of the engine 2 can be improved.

Further, as shown in FIG. 10, the impact separation piece 1101 is an impact grid 111, and the flow guiding piece 1102 includes multiple flow guiding baffles 112.

The pressure stabilizing cavity 110 is arranged with a second air inlet 113. The impact grid 111 corresponds to the second air inlet 113, to impact entering gas to reduce generation of condensed water at the second air inlet 113. The impact grid 111 mainly impacts and rubs entering gas at the second air inlet 113, so that heat is generated to make the gas temperature of the entering gas rise, thereby reducing the generation of condensed water.

Multiple air inlet passages 120 are provided. Each of the multiple flow guiding baffles 112 is arranged extending toward the air inlet passage 120. The multiple flow guiding baffles 112 guide condensed water in the pressure stabilizing cavity 110 to the multiple air inlet passages 120.

Specifically, the multiple air inlet passages 120 are correspondingly in communication with the cylinders of the engine 2. When gas in the intercooler 200 enters the pressure stabilizing cavity 110 through the second air inlet 113, the isolation of condensed water at the second air inlet 113 can be accelerated. A transition between the second air inlet 113 and the intercooler 200 may be "U"-shaped to accelerate the generation of condensed water. Condensed water may sequentially pass through the pressure stabilizing cavity 110 and the multiple air inlet passages 120 and correspondingly flow into combustion chambers of the cylinders. The impact grid 111 is arranged in the pressure stabilizing cavity 110, and the impact grid 111 corresponds to the second air inlet 113, so that condensed water that enters the pressure stabilizing cavity 110 can impact the impact grid 111, and condensed water that flows quickly can spread to different positions of the pressure stabilizing cavity 110, and the flow rate of condensed water can be reduced.

The multiple flow guiding baffles 112 are arranged, and the flow guiding baffles 112 are arranged extending toward the air inlet passages 120. In this way, when condensed water in the pressure stabilizing cavity 110 flows into the air inlet passages 120, the flow guiding baffles 112 can guide the condensed water into the air inlet passages 120. In this way, the flowing of condensed water can be stabler, and flows of condensed water that enters the air inlet passages 120 are more uniform, so that flows of condensed water that flows into the cylinders through the air inlet passages 120 are more uniform, and the operating performance of the engine 2 can be improved.

It should be noted that heights and widths of the impact grid 111 and the flow guiding baffles 112 should not be excessively large. In this way, the arrangement of the impact grid 111 and the flow guiding baffles 112 can be kept from affecting normal air inflow of the air inlet manifold 100, and the length and direction of the flow guiding baffles 112 can be adjusted according to an actual flow direction of condensed water inside the air inlet manifold 100.

An engine 2 according to an embodiment of the present disclosure is described below with reference to the accompanying drawings. As shown in FIG. 1 to FIG. 5, the engine 2 includes an engine cylinder block 800, a cylinder head 400, and an air inlet assembly 1 of an engine.

The cylinder head 400 covers above the engine cylinder block 800. A mounting bracket 500 is arranged on the cylinder head 400. In an up-down direction, the intercooler 200 is located above the air inlet manifold 100. The mounting bracket 500 is fixedly connected to the intercooler 200 and/or the throttle valve 300. With such an arrangement, the engine 2 is in communication with the air inlet manifold 100, so that air cooled in the intercooler 200 enters the engine cylinder block 800 through the air inlet manifold 100 for full combustion. In addition, the intercooler 200 with a small volume is arranged above the air inlet manifold 100, so that the entire mounting structure is compact, which is conducive to the freedom design of an engine compartment of the engine 2, and reduces costs. In addition, to reduce the vibration of the intercooler 200, the mounting bracket 500 is arranged on the cylinder head 400, and is configured to fixedly connect the intercooler 200 and/or a first air inlet valve 30. In this way, the mounting modality of the entire intercooler 200 can be effectively improved, thereby improving noise, vibration, and harshness (NVH) performance.

The mounting bracket 500 is fixed at the cylinder head 400, and is connected to the throttle valve 300, so that the throttle valve 300 can be better and stably mounted at the first air inlet 210 of the intercooler 200. In addition, multiple fixing brackets 600 are arranged at intervals on the air inlet manifold 100. The air inlet manifold 100 can be reliably fixed on the engine cylinder block 800 or a frame through the multiple fixing brackets 600, so that the mounting modality of the engine is improved, thereby improving the NVH performance. In addition, a mounting hole is provided in the mounting bracket 500. One end of the mounting bracket 500 may be fixedly connected to a flange structure on the throttle valve 300, and another end of the mounting bracket 500 may be fixedly connected to the cylinder head 400 by a fastener, so that the throttle valve 300 is fixed reliably.

Through the use of the air inlet assembly 1 of the engine according to the foregoing embodiments of the present disclosure, the engine 2 according to embodiments of the second aspect of the present disclosure has advantages such as low costs, a small volume, and convenient mounting.

A vehicle 1000 according to an embodiment of the present disclosure is described below with reference to FIG. 11. The vehicle includes the engine 2 according to the foregoing embodiment of the present disclosure.

The vehicle 1000 may be a hybrid vehicle. In the hybrid vehicle, because a hybrid system needs to be arranged, an internal space of the hybrid vehicle is more compact. In this case, the engine 2 provided in the foregoing embodiments is used in the vehicle 1000 in this embodiment, and the engine 2 has the air inlet assembly 1 of an engine in the foregoing embodiments. In the air inlet assembly 1 of the engine 2, a volume of the intercooler 200 may be set small, to meet a requirement of a compact internal space of the hybrid vehicle.

Through the use of the engine 2 according to the foregoing embodiments of the present disclosure, the vehicle 1000 according to embodiments of the second aspect of the present disclosure has advantages such as low costs, a small volume, and convenient mounting.

Other compositions and operations of the air inlet assembly 1 of an engine, the engine 2, and the vehicle 1000 according to the embodiments of the present disclosure are known to those of ordinary skill in the art, and are not described herein again in detail.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic descriptions of the foregoing terms do not necessarily directed at a same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. An air inlet assembly (1) of an engine, comprising:
an air inlet manifold (100);
an intercooler (200), the intercooler (200) having a first air inlet (210) and an air outlet (220), and the air outlet (220) being directly attached to and in communication with the air inlet manifold (100); and
a throttle valve (300), the throttle valve (300) being arranged on the first air inlet (210) to control an air inflow amount.

2. The air inlet assembly (1) of an engine according to claim 1, wherein the intercooler (200) comprises:
an intercooler body (230);
an air inlet cavity (240); and
an air outlet cavity (250), the intercooler body (230) being arranged between the air inlet cavity (240) and the air outlet cavity (250), and in communication with both the air inlet cavity (240) and the air outlet cavity (250), the first air inlet (210) being opened on the air inlet cavity (240), and the air outlet (220) being opened on the air outlet cavity (250).

3. The air inlet assembly (1) of an engine according to claim 2, wherein a gas storage capacity of the intercooler body (230) is V1, and V1 satisfies a relation formula: 1200 ml ≤ V1 ≤ 1300 ml.

4. The air inlet assembly (1) of an engine according to claim 2 or 3, wherein the air inlet cavity (240) is arranged with a first air inlet section (241), a second air inlet section (242), and a third air inlet section (243) that are sequentially in communication, the first air inlet section (241) is in communication with the first air inlet (210), and the third air inlet section (243) is in communication with the intercooler body (230), to uniformly guide gas into the intercooler body (230).

5. The air inlet assembly (1) of an engine according to claim 4, wherein a cross-sectional area of the third air inlet section (243) is greater than a cross-sectional area of the first air inlet section (241), and a cross-sectional area of the second air inlet section (242) gradually increases from the first air inlet section (241) to the third air inlet section (243).

6. The air inlet assembly (1) of an engine according to claim 5, wherein a spacing between a front side wall and a rear side wall of the second air inlet section (242) gradually increases from right to left, an angle between the front side wall and the rear side wall of the second air inlet section (242) is α, and α satisfies a relation formula: 50° ≤ α ≤ 70°.

7. The air inlet assembly (1) of an engine according to any one of claims 2 to 6, wherein the air outlet cavity (250) is arranged with a first air outlet section (251), a second air outlet section (252), and a third air outlet section (253) that are sequentially in communication, the first air outlet section (251) is in communication with the air outlet (220), and the third air outlet section (253) is in communication with the intercooler body (230), to uniformly guide gas into the air inlet manifold (100).

8. The air inlet assembly (1) of an engine according to claim 7, wherein a cross-sectional area of the third air outlet section (253) is less than a cross-sectional area of the first air outlet section (251), and a cross-sectional area of the second air outlet section (252) gradually decreases from the first air outlet section (251) to the third air outlet section (253).

9. The air inlet assembly (1) of an engine according to claim 8, wherein a spacing between a front side wall and a rear side wall of the second air outlet section (252) gradually decreases from right to left, an angle between the rear side wall of the second air outlet section (252) and a cross-section of the air outlet cavity (250) is β, and β satisfies a relation formula: 20° ≤ β ≤ 40°.

10. The air inlet assembly (1) of an engine according to claim 8 or 9, wherein a spacing between an upper side wall and a lower side wall of the second air outlet section (252) gradually decreases from right to left, an angle between the upper side wall and the lower side wall of the second air outlet section (252) is γ, and γ satisfies a relation formula: 25° ≤ γ ≤ 35°.

11. The air inlet assembly (1) of an engine according to any one of claims 2 to 10, wherein a plurality of reinforcing ribs (260) are arranged on outer walls of the air inlet cavity (240) and/or the air outlet cavity (250), and the plurality of reinforcing ribs (260) are distributed in a staggered manner.

12. The air inlet assembly (1) of an engine according to any one of claims 2 to 11, wherein the intercooler body (230) is arranged with a cooling channel, and the intercooler body (230) is arranged with a water inlet pipe connector (270) in communication with one end of the cooling channel and a water outlet pipe connector (280) in communication with another end of the cooling channel.

13. The air inlet assembly (1) of an engine according to any one of claims 1 to 11, wherein the air inlet manifold (100) is arranged with a pressure stabilizing cavity (110) and an air inlet passage (120), one end of the air inlet passage (120) is in communication with the pressure stabilizing cavity (110), another end of the air inlet passage (120) is in communication with an engine cylinder block (800), a bottom wall of the air inlet passage (120) comprises a first wall section (121), the first wall section (121) is connected to a bottom wall of the pressure stabilizing cavity (110) and is arranged obliquely downward with respect to the bottom wall of the pressure stabilizing cavity (110), an angle δ is formed between the first wall section (121) and the bottom wall of the pressure stabilizing cavity (110), and 2° ≤ δ ≤ 5°.

14. The air inlet assembly (1) of an engine according to claim 13, wherein the bottom wall of the air inlet passage (120) further comprises:
a second wall section (122), the second wall section (122) being connected to a side of the first wall section (121) away from the pressure stabilizing cavity (110), the second wall section (122) being arranged obliquely downward with respect to the first wall section (121), an angle ε being formed between the second wall section (122) and the first wall section (121), and 24° ≤ ε ≤ 26°.

15. The air inlet assembly (1) of an engine according to claim 13 or 14, wherein a volume of the pressure stabilizing cavity (110) is V2, and V2 satisfies a relation formula: 1 L < V2 < 1.2 L.

16. The air inlet assembly (1) of an engine according to any one of claims 13 to 15, wherein a length of the air inlet passage (120) is L, and L satisfies a relation formula: 70 mm < L < 80 mm.

17. The air inlet assembly (1) of an engine according to any one of claims 13 to 16, wherein the pressure stabilizing cavity (110) is arranged with:
an impact separation piece (1101), the impact separation piece (1101) being located in the pressure stabilizing cavity (110), to impact entering gas to reduce generation of condensed water; and
a flow guiding piece (1102), the flow guiding piece (1102) being arranged in the pressure stabilizing cavity (110), and being configured to guide condensed water in the pressure stabilizing cavity (110) to the air inlet passage (120).

18. The air inlet assembly (1) of an engine according to claim 17, wherein the impact separation piece is an impact grid (111), the pressure stabilizing cavity (110) is arranged with a second air inlet (113), and the impact grid (111) corresponds to the second air inlet (113), to impact entering gas to reduce generation of condensed water; and
the flow guiding piece comprises a plurality of flow guiding baffles (112), a plurality of air inlet passages (120) are provided, each of the plurality of flow guiding baffles (112) extends toward the air inlet passages (120), and the plurality of flow guiding baffles (112) guide condensed water in the pressure stabilizing cavity (110) to the plurality of air inlet passages (120).

19. An engine (2), comprising:
an engine cylinder block (800);
a cylinder head (400), the cylinder head (400) covering above the engine cylinder block (800), and a mounting bracket (500) being arranged on the cylinder head (400); and
the air inlet assembly (1) of an engine according to any one of claims 1 to 18, in an up-down direction, the intercooler (200) being located above the air inlet manifold (100), and the mounting bracket (500) being fixedly connected to the intercooler (200) and/or the throttle valve (300).

20. A vehicle (1000), comprising the engine (2) according to claim 19.
